# FASCICULE DE BREVET EUROPEEN

(11) **EP 0 542 604 B1**
(45) Date de publication et mention de la délivrance du brevet: **24.07.1996**
(21) Numéro de dépôt: 92402998.6
(22) Date de dépôt: 05.11.1992
(51) Int. Cl.: C10G 11/18

(54) **Procédé et dispositif d'échange thermique de particules solides pour double régénération en craquage catalytique**
Verfahren und Vorrichtung für Wärmeaustausch von festen Teilchen für doppelte Regenerierung in katalytischem Kracken
Process and apparatus for heat exchange of solid particles for double regeneration in catalytic cracking

(30) Priorité: 14.11.1991 FR 9114153
(43) Date de publication de la demande: 19.05.1993
(73) Titulaire: INSTITUT FRANCAIS DU PETROLE, F-92502 Rueil-Malmaison (FR)
(72) Inventeur: Bonifay, Régis, F-92600 Asnieres (FR); Hoffmann, Frédéric, F-75010 Paris (FR); Pontier, Renaud, F-38200 Vienne (FR); Gauthier, Thierry, F-69230 Saint Genis Laval (FR)

(56) Documents cités:
- EP-A- 0 511 071
- FR-A- 2 628 342
- US-A- 4 434 245
- US-A- 4 614 726
- US-A- 4 923 834

## Description

L'invention concerne un procédé de régénération d'un catalyseur usé avec échange thermique en lit fluidisé et un dispositif pour la mise en oeuvre de ce procédé. Plus particulièrement, le procédé peut s'appliquer à la régénération de catalyseurs particulièrement chargés en résidus hydrocarbonés et en coke après réaction avec une charge d'hydrocarbures. Elle peut concerner les catalyseurs d'hydrotraitement, d'hydrocraquage ou de craquage catalytique, de réformage ou même toute masse de contact utilisée par exemple dans les procédés de craquage thermique.

A titre d'exemple purement illustratif, on appliquera le procédé à la régénération de catalyseur usé issu d'un procédé de craquage catalytique, en lit fluidisé, de charges lourdes ayant un carbone Conradson élevé, telles qu'un résidu atmosphérique, un résidu sous vide, un résidu désasphalté, ces résidus pouvant être hydrotraités.

Ce procédé s'appliquera tout particulièrement au contrôle de la température.

Les procédés de craquage catalytique convertissent les charges hydrocarbonées en produits plus légers tels que des essences. Initialement, les charges étaient relativement légères, des gazoles par exemple et pour obtenir une efficacité maximale de conversion à partir de catalyseurs zéolithiques très actifs, il était nécessaire de retirer le maximum de coke qui s'était déposé sur ces catalyseurs et qui diminuait son activité, durant une étape de régénération à une température se situant entre 520 et 800°C.

La demande pressante en carburants amène les raffineurs à s'intéresser à des charges de plus en plus lourdes, comportant des hydrocarbures à haut point d'ébullition, par exemple à un point d'ébullition supérieur à 550°C, ayant un carbone Conradson élevé ou une concentration en métaux importante. Du coke et des hydrocarbures lourds peuvent alors se déposer sur le catalyseur en quantité importante durant la phase de craquage catalytique et sa régénération par une combustion peut provoquer un dégagement de chaleur important qui peut détériorer l'appareillage et désactiver le catalyseur, notamment lors de longues expositions à des températures supérieures à 800°C. Il devient alors impératif de contrôler la régénération du catalyseur. Ce problème se pose notamment lorsqu'on veut appliquer à une technologie existant depuis longtemps et traitant essentiellement des charges hydrocarbonées conventionnelles, un procédé mettant en jeu des charges beaucoup plus lourdes.

Un des objets de l'invention est donc de proposer un procédé et un dispositif de régénération comportant le contrôle de refroidissement du catalyseur dans une unité de craquage catalytique en vue du traitement de charges lourdes.

Un autre objet de l'invention est de répondre à une plus grande souplesse d'utilisation du dispositif.

L'art antérieur est illustré par les brevets suivants :
- le brevet US 4614724 enseigne un dispositif décrivant un régénérateur dont la température de régénération est contrôlée par un échangeur de chaleur externe à écoulement descendant à travers un faisceau de tubes.
   Le catalyseur refroidi est recyclé vers le régénérateur par une conduite de remontée du catalyseur en l'état fluidisé, dans le lit dense de ce régénérateur. Le catalyseur dans l'échangeur est maintenu en lit dense par un gaz de fluidisation s'écoulant à contre-courant du sens d'écoulement du catalyseur et le gaz de fluidisation est soit entraîné avec celui-ci lorsque le débit est très faible, soit évacué par la ligne d'entrée du catalyseur. Cette circulation à contre-courant du gaz perturbe l'écoulement du catalyseur dans la tubulure d'entrée et dans l'échangeur et l'échange thermique n'est pas maximal.
- Le brevet US 4434245 décrit un régénérateur à deux niveaux, comportant un échangeur externe avec admission latérale du catalyseur chaud en provenance du niveau supérieur qui est une zone de stockage.
   Le catalyseur refroidi est recyclé par une conduite recevant l'air de régénération ainsi que le catalyseur usagé, dans une zone correspondant au niveau inférieur où s'effectue la combustion. Donc, le fonctionnement du régénérateur et de l'échangeur est étroitement lié puisque le retour du catalyseur refroidi dans le régénérateur est fonction du débit de fluidisation de l'air servant à la régénération qui circule dans ladite conduite. Ce brevet enseigne par ailleurs une tubulure au-dessus de l'échangeur qui débouche dans le lit dense de l'échangeur, de sorte que le désengagement du gaz et des fumées ne peut s'effectuer parfaitement compte tenu de la présence du catalyseur dans cette tubulure. Il peut alors se produire un phénomène de circulation de catalyseur avec retour par le haut (backmixing). Le désengagement du gaz s'effectue d'autant plus mal que le faisceau d'échange arrive jusqu'à l'extrémité supérieure de l'échangeur. Le mélange n'est pas forcément homogène et il existe donc une zone supérieure où le catalyseur stagne et où il est mal renouvelé, de sorte que l'échange thermique est diminué.
- Le brevet US 4923834 décrit un procédé à "backmixing" où une tubulure supérieure débouchant dans la conduite d'admission dans l'échangeur du catalyseur qui circule en lit dense, permet le retour du catalyseur de l'échangeur dans la chambre de stockage du régénérateur. Il s'agit donc ici de refroidissement par "backmixing" et non pas d'une solution à un problème d'évacuation d'un échangeur thermique de fumées et d'air de fluidisation permettant de maximiser l'échange thermique.
- Enfin, l'art antérieur est illustré par le brevet FR 2628342 (US 4965232) dans lequel il est décrit un système externe de refroidissement du catalyseur dans une unité comportant une double régénération du catalyseur usagé en provenance d'un dispositif de craquage catalytique, les deux régénérateurs comprenant des évacuations distinctes des effluents de combustion, le catalyseur circulant du second régénérateur vers le premier via l'échangeur thermique. Le problème technique est, aussi, relatif à la recherche d'un échangeur thermique maximal. En effet, l'alimentation en catalyseur de l'échangeur thermique par une conduite inclinée adéquate ne s'effectue pas correctement en raison d'une quasi-absence de volume réservé au désengagement du gaz de fluidisation du catalyseur dans l'échangeur de sorte que ce gaz de fluidisation a tendance à remonter dans la conduite sous forme de bulles et donc à contrarier l'écoulement du catalyseur.

La présente invention remédie aux inconvénients mentionnés ci-dessus et permet d'obtenir des résultats sensiblement améliorés.

De manière plus précise l'invention concerne un procédé de régénération en lit fluidisé d'un catalyseur contaminé par du coke déposé sur celui-ci, dans lequel on introduit le catalyseur à régénérer et un gaz contenant de l'oxygène dans une première zone de régénération où il est régénéré au moins en partie dans des conditions appropriées en lit dense, on sépare les effluents gazeux de première régénération que l'on évacue par leurs propres moyens, de préférence dans la partie supérieure de la première zone de régénération et l'on prélève le catalyseur au moins en partie régénéré de la première zone pour l'envoyer dans la seconde zone de régénération distincte de la première zone de régénération où il est régénéré à une température supérieure à celle de la première zone de régénération, on sépare le catalyseur des fumées de seconde régénération que l'on évacue au moins en partie, le procédé étant caractérisé par les étapes suivantes :
a) On envoie par une conduite inclinée vers le bas une partie au moins du catalyseur contenu dans la seconde zone de régénération ainsi qu'une partie des fumées dans une zone d'échange thermique externe et de hauteur appropriée, ladite conduite reliant le lit dense de la seconde zone de régénération à la zone d'échange thermique et y débouchant en un point de jonction situé sous le niveau du lit dense de la seconde zone de régénération à une distance de l'extrémité supérieure de la zone d'échange thermique comprise entre le quart et la moitié de la hauteur totale, et de préférence entre le quart et le tiers de la hauteur, et disposé de telle façon que l'on détermine, de l'extrémité inférieure de ladite zone d'échange thermique jusqu'au-dessus dudit point de jonction, une zone en lit dense de catalyseur s'établissant sensiblement jusqu'au niveau de catalyseur dans la seconde zone de régénération et une zone de désengagement ayant un volume approprié au-dessus dudit lit dense jusqu'à l'extrémité supérieure de la zone d'échange thermique, la hauteur de la zone d'échange thermique étant telle que le volume disponible pour le désengagement des gaz correspond à une hauteur de 1 à 5m,
b) on refroidit le catalyseur dans une partie au mois de ladite zone en lit dense dans des conditions d'échange thermique indirect et de fluidisation adéquates, en présence d'un gaz de fluidisation contenant de préférence de l'oxygène, le catalyseur circulant vers le bas à contre-courant du sens d'écoulement du gaz de fluidisation,
c) on procède à la séparation du catalyseur et du gaz de fluidisation ainsi que des éventuelles fumées de régénération dans ledit volume de la zone de désengagement,
d) on évacue lesdits gaz et fumées de l'étape c) de la zone de désengagement et on les envoie dans la phase diluée au-dessus du lit dense de la seconde zone de régénération ; et
e) on soutire le catalyseur refroidi de la partie inférieure de la zone d'échange thermique et on le recycle dans la première zone de régénération.

L'invention présente l'avantage d'une grande souplesse d'utilisation. En reliant la ligne de dégazage à la zone de désengagement des fumées et des gaz de fluidisation de catalyseur dans la partie supérieure de l'échangeur disposant d'un volume suffisant bien au-dessus d'un niveau du lit dense, on favorise l'écoulement du catalyseur du second régénérateur autour du faisceau de tubes de l'échangeur. On favorise aussi son écoulement dans la conduite alimentant l'échangeur. De plus, la totalité du débit de catalyseur qui peut être augmenté pour satisfaire les conditions d'équilibre thermique dans l'unité en fonction de la sévérité de la charge, traverse l'échangeur et contribue à l'amélioration de l'échange thermique et de cette façon à son contrôle.

Selon une première variante, le catalyseur refroidi peut être recyclé par gravité soit directement dans le lit en phase dense de la première zone de régénération soit directement dans la phase diluée de la première zone de régénération.

Selon une seconde variante permettant de mieux satisfaire le bilan des pressions, le catalyseur refroidi peut être recyclé dans la phase dense de la première zone de régénération, avantageusement au-dessus de l'organe de fluidisation. Dans ce cas, le catalyseur descend par gravité dans une conduite qui est connectée à une jonction en Y ou en J puis remonte, accéléré par des moyens appropriés en présence d'un gaz de fluidisation jusque dans la phase dense de catalyseur. Une vanne située sur la conduite de transfert de préférence en dessous du niveau de l'extrémité inférieure de la première zone de régénération permet de réguler, manuellement ou automatiquement, le débit du catalyseur circulant dans la zone d'échange thermique. La vitesse d'écoulement du catalyseur passe par exemple de 1 à 2 m/s dans la partie descendante de la conduite, à 5 à 12 m/s dans la partie ascendante. Ce gaz de remontée du catalyseur contribue généralement à sa fluidisation dans la première zone de régénération et à sa régénération, s'il contient de l'oxygène, ce qui est généralement le cas.

Le catalyseur traversant l'échangeur thermique est généralement refroidi de 50 à 300°C.

Selon une caractéristique de l'invention, la vitesse de fluidisation dans l'échangeur est en général de 0,025 m/s à 1 m/s, avantageusement de 0,05 à 0,5 m/s et de préférence de 0,1 à 0,4 m/s. Dans ces conditions préférées, on a observé un meilleur coefficient d'échange thermique. Selon une autre caractéristique, la vitesse de fluidisation dans le second régénérateur est en général de 0,6 à 1,5 m/s et avantageusement de 0,8 à 1,2 m/s.

Pour permettre un désengagement satisfaisant du gaz de fluidisation et des fumées de régénération du catalyseur, on choisit en règle générale un échangeur dont la hauteur est telle que le volume disponible pour le désengagement du gaz de fluidisation et des fumées correspond à une hauteur de 0,1 à 5 m et de préférence de 1 à 2,5 m au-dessus du niveau du lit dense dans la seconde zone de régénération.

Les gaz et les fumées peuvent être évacués de la zone de désengagement à une vitesse de 2 à 15 m/s et avantageusement de 5 à 8 m/s.

Le diamètre de la tubulure d'évacuation est habituellement tel que la perte de charge est limitée, par exemple à 0,1 bar. Cela correspond à un rapport de diamètre des tubulures d'admission du catalyseur et d'évacuation des gaz, habituellement inférieur ou égal à 10, par exemple compris entre 3 et 6.

Selon un mode de réalisation avantageux, sensiblement tout l'échange thermique indirect peut être effectué au-dessous du point de jonction de la conduite inclinée d'arrivée du catalyseur chaud dans l'échangeur thermique. Dans ces conditions, l'échange thermique est maximisé puisque la surface totale de l'échangeur est en contact avec tout le catalyseur y circulant.

Selon un autre mode une partie des tubes de refroidissement dans l'échangeur peut dépasser le point de jonction, voire atteindre sensiblement le niveau supérieur de la phase dense.

Le contrôle du débit de catalyseur traversant l'échangeur et de ce fait le contrôle thermique de la régulation est habituellement assuré par une vanne à la sortie de l'échangeur dans une conduite sensiblement allongée recyclant du catalyseur refroidi dans le premier régénérateur. Cette vanne est en général asservie par des moyens de contrôle appropriés qui sont en liaison avec une sonde de température disposée soit dans le lit dense soit dans le lit fluidisé du second générateur et qui comparent en général de manière continue le signal de température avec un signal de référence, préalablement défini en fonction des paramètres de régénération et du type de charge.

Ces moyens de contrôle peuvent éventuellement asservir une vanne de régulation de débit d'air de fluidisation dans le premier régénérateur.

Selon un autre mode de réalisation, on peut aussi mesurer la température de première régénération par une sonde de température plongeant de préférence dans le lit dense et asservir grâce auxdits moyens de contrôle la vanne d'ouverture, du catalyseur à la sortie de l'échangeur ainsi qu'éventuellement la vanne de régulation de débit d'air dans le premier régénérateur.

L'invention concerne aussi un dispositif de régénération en lit fluidisé d'un catalyseur contaminé par du coke, comprenant un premier régénérateur (1) qui comporte des moyens d'entrée (2) d'un catalyseur usagé, des moyens de fluidisation (5) et de régénération du catalyseur par un gaz contenant de l'oxygène adaptés à réaliser un lit fluidisé en phase dense (3), des premiers moyens de séparation (6) des fumées de régénération du catalyseur en partie régénéré et des premiers moyens (7) d'évacuation desdites fumées, des moyens de transfert (10) dudit catalyseur du premier régénérateur vers un second régénérateur (9) défini ci-après, le second régénérateur comprenant des moyens de fluidisation et de régénération (12) du catalyseur au moins en partie régénéré par un gaz contenant de l'oxygène adaptés à réaliser un lit fluidisé en phase dense (19) jusqu'à un niveau (19a) approprié, des seconds moyens de séparation (17) des fumées de régénération du catalyseur régénéré et des seconds moyens d'évacuation (18) desdites fumées séparés des premiers moyens d'évacuation, ledit dispositif étant caractérisé en ce qu'il comporte en combinaison :
- un échangeur de chaleur (21) vertical externe de forme allongée, de hauteur appropriée et adapté à recevoir le catalyseur chaud et éventuellement une partie des fumées par une conduite inclinée (20) reliant ledit lit dense du second régénérateur à l'échangeur et à le refroidir alors qu'il circule à travers l'échangeur dans une direction descendante, ledit échangeur comprenant des moyens (24) de fluidisation du catalyseur par un gaz à son extrémité inférieure adaptés à y réaliser un lit dense à un niveau (19b) s'établissant sensiblement jusqu'à celui du lit dense dans la seconde zone de régénération, ladite conduite (20) inclinée débouchant dans l'échangeur (21) en un point de jonction situé sous le niveau (19a) du lit dense du second régénérateur (9) à une distance de l'extrémité supérieure (26) de l'échangeur comprise entre le quart et la moitié de sa hauteur totale, telle qu'elle permet la séparation des éventuelles fumées de régénération et du gaz de fluidisation, du catalyseur dans la partie supérieure (27) de l'échangeur ou zone de désengagement située au-dessus du niveau du lit dense dans l'échangeur, la zone de désengagement ayant une hauteur de 1 à 5 m ;
- des moyens (28) d'évacuation des fumées et du gaz de fluidisation de la zone de désengagement à la partie supérieure de l'échangeur, reliés au second régénérateur (9), en un point au-dessus du niveau (19a) du lit dense du catalyseur, dans ledit régénérateur et
- des moyens de soutirage et de recyclage (34, 30) adaptés à une circulation du catalyseur refroidi de l'extrémité inférieure de l'échangeur vers le premier régénérateur.

Le point de jonction au niveau de l'échangeur thermique de la conduite inclinée peut être situé à une distance de l'extrémité supérieure de l'échangeur comprise entre le quart et la moitié de la hauteur totale et de préférence entre le quart et le tiers.

La quantité de catalyseur refroidi par l'échangeur est généralement inférieure à 150% en poids du catalyseur en circulation dans la première zone de régénération. On a observé qu'on obtenait un excellent taux de régénération avec une quantité de catalyseur refroidi comprise entre 15 et 50% en poids.

Les échangeurs thermiques peuvent être d'un type connu en soi, par exemple ceux décrits dans le brevet FR 2628432, et sont généralement constitués de faisceaux de tubes échangeant de manière indirecte de la chaleur avec le catalyseur (tubes serpentins, tubes en U, en épingle ou tubes baïonnette). Celui-ci peut y circuler soit à l'intérieur, soit à l'extérieur. La paroi de l'échangeur thermique peut comprendre éventuellement une surface de tubes-membrane. Le fluide de refroidissement qui circule dans l'échangeur peut être de l'air, de l'eau, de la vapeur d'eau ou des mélanges de ces fluides.

Le catalyseur régénéré selon l'invention est également de type conventionnel, tel que les silices-alumines de type zéolithique ayant avantageusement une granulométrie de 30 à 100 micromètres.

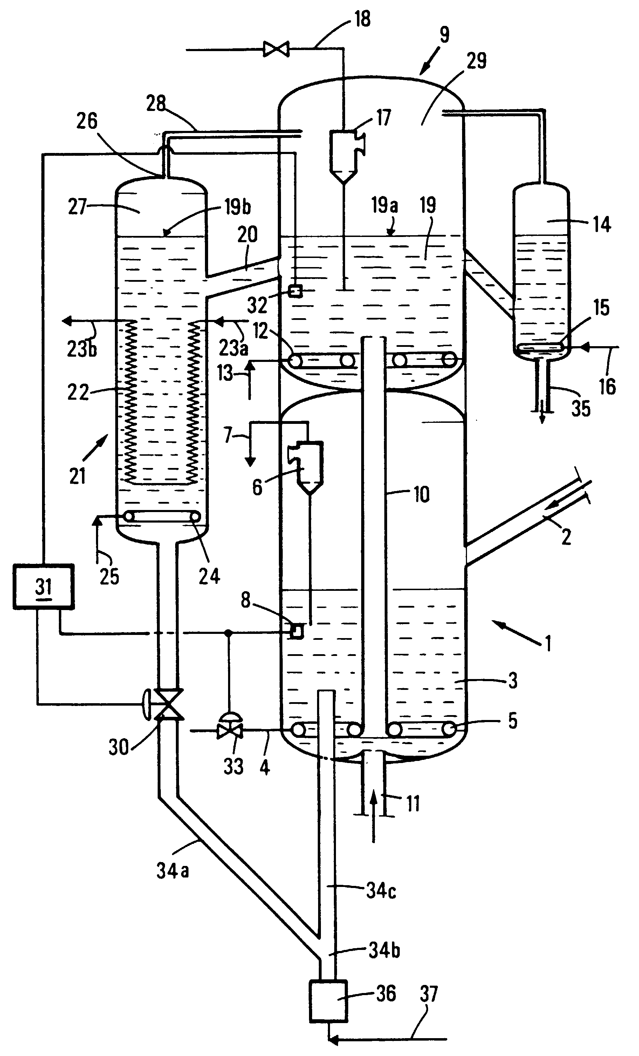

L'invention sera mieux comprise au vu de la figure illustrant le procédé et le dispositif.

Un premier régénérateur 1 provenant d'une unité de craquage catalytique reçoit par une ligne 2 en provenance d'un séparateur strippeur non représenté du catalyseur zéolithique sur lequel s'est déposé du coke pendant la réaction de craquage catalytique. Cette ligne débouche dans le lit catalytique en un endroit approprié de préférence dans la phase diluée située a-dessus du lit fluidisé dense 3. Un gaz de régénération contenant de l'oxygène est amené par une ligne 4 dans un organe de fluidisation 5 tel qu'une grille, un anneau ou une tuyauterie de distribution, à la base du régénérateur et permet la fluidisation en lit dense du catalyseur et la combustion à contre-courant d'environ 50 à 90 % du coke de manière continue. Les fumées de régénération et le catalyseur entraîné sont séparés dans des cyclones 6 et les fumées de régénération contenant comme produits de combustion majoritaires du monoxyde de carbone, du dioxyde de carbone et de la vapeur d'eau sont évacuées par une ligne 7 vers un brûleur.

La température du lit fluidisé 3 est mesurée à l'aide d'une sonde 8. Lorsque cette température décroit au-dessous d'une valeur T1 de consigne, du fait de l'introduction de catalyseur relativement froid introduit par les lignes 34 comme on le verra ci-après, le débit de fluide oxydant (de fluidisation) amené à l'organe de fluidisation 5 et régulé par une vanne de contrôle 33 sur la ligne 4 est augmenté jusqu'à ce que la température mesurée en 8 retrouve la valeur de consigne.

Les particules de catalyseur partiellement régénéré sont ensuite transférées vers un second régénérateur 9 disposé au-dessus du premier régénérateur 1, par le conduit 10 alimenté en air par la ligne 11. A la base du second régénérateur, est disposé un diffuseur 12 alimenté en air par la ligne 13. La combustion du catalyseur partiellement régénéré est réalisée dans le lit dense 19 dont la partie supérieure définit un niveau 19b à une hauteur appropriée, fonction de l'aération réalisée.

Une partie des particules de catalyseur régénéré est évacuée latéralement dans une enceinte tampon 14. Dans cette enceinte, la fluidisation des particules est habituellement contrôlée par un diffuseur annulaire 15, alimenté en gaz de fluidisation, tel que de l'air ou un gaz inerte, par une ligne 16. A partir de l'enceinte 14, les particules du catalyseur régénéré sont recyclées par un conduit 35 à l'alimentation d'un élévateur (riser) non représenté, en quantité déterminée par l'ouverture ou la fermeture d'une vanne. A la partie supérieure du second régénérateur, les gaz de combustion sont séparés des particules de catalyseur par des cyclones externes 17 et sont évacués par une ligne 18, séparée de la ligne d'évacuation 7 des fumées de première régénération.

Une partie du catalyseur chaud et une partie des fumées à une température de 600 à 850°C sont prélevées dans le lit dense 19 du second régénérateur en un point situé au-dessus de l'organe d'injection d'air 12 et amenées par gravité, grâce à une conduite 20 inclinée vers le bas, par exemple de 30 à 60 degrés d'angle à compter de l'axe de l'échangeur, dans un échangeur de chaleur 21 adapté à échanger par échange indirect de la chaleur. Cet échangeur est vertical, de forme allongée, cylindrique et contient un faisceau d'échange comprenant par exemple des tubes 22 en serpentin dans lequel circule un fluide approprié tel que de l'eau sous pression amenée par une ligne 23a. On récupère par une ligne 23b de la vapeur d'eau de cet échange thermique. Le faisceau de tubes est avantageusement situé sous la conduite inclinée de sorte que tout le catalyseur prélevé circule à travers le faisceau, de haut en bas. A l'extrémité inférieure de l'échangeur un moyen de fluidisation 24 (anneau ou grille) introduit de l'air, amené par une ligne 25 à contre-courant du sens de l'écoulement du catalyseur et maintient le catalyseur en lit dense à travers le faisceau de tubes.

La conduite 20 d'amenée du catalyseur chaud inclinée selon un angle de 30 à 60° à compter de l'axe de l'échangeur débouche dans cet échangeur en un point de jonction situé sous le niveau 19a du lit dense du second régénérateur par exemple un un point situé à une distance de l'extrémité supérieure 26 de l'échangeur comprise entre le quart et le tiers de sa hauteur, de sorte que, dans la partie supérieure de l'échangeur, le catalyseur en lit dense atteint un niveau 19b approprié qui est fonction des vitesses de fluidisation respectives dans le second régénérateur et l'échangeur thermique et donc des masses volumiques respectives. Il peut s'établir ainsi une faible différence de niveau du catalyseur dans le régénérateur et l'échangeur.

La hauteur de l'échangeur est choisie de telle façon que par rapport à ce niveau dans le régénérateur, une zone libre dite zone de désengagement 27 de 1 à 2,5 m dans l'échangeur soit aménagée pour permettre la séparation du gaz de fluidisation et des éventuelles fumées de régénération du catalyseur. Une ligne de dégazage 28 évacue les fumées et les gaz de la phase diluée de l'extrémité supérieure de l'échangeur vers la phase fluidisée diluée 29 au-dessus du lit fluidisé dense du second régénérateur. Son diamètre est choisi de telle façon que le rapport du diamètre de la ligne de dégazage sur celui de la conduite 20 d'admission du catalyseur soit compris entre 3 et 6. La vitesse de sortie des gaz est en général de 2 à 15 m/s.

Des moyens de soutirage et de recyclage 34 comprennent une conduite 34a sensiblement verticale dans laquelle le catalyseur s'écoule par gravité qui est connectée à une jonction en Y ou en J 34b située sous le premier régénérateur. Le catalyseur est envoyé par un organe de remontée 36 (lift) relié à la jonction 34b, qui l'accélère grâce à de l'air de fluidisation 37 dans la conduite 34c et le recycle dans la phase dense du premier régénérateur, de préférence au-dessus de l'organe de fluidisation 5.

A la sortie de l'échangeur 21, la vanne 30, telle qu'une vanne à glissière, située en dessous de l'extrémité inférieure du premier régénérateur et en amont du "lift" permet de contrôler le débit de catalyseur transféré d'un régénérateur à l'autre, dès que la température du catalyseur régénéré excède la valeur de consigne requise.

Le débit de catalyseur traversant l'échangeur thermique est ajusté pour maintenir la température régnant dans le deuxième régénérateur et donc, finalement, la température d'entrée dans la zone réactionnelle (riser), à une température de consigne propre à la charge craquée dans l'unité.

Le contrôle thermique de la régénération est effectué par la combinaison des organes suivants :

Des moyens de contrôle et d'asservissement 31 sont reliés à la vanne 30 disposée sur la conduite 17 d'évacuation du catalyseur de l'échangeur. Ces moyens sont d'autre part connectés à une sonde 32 de température localisée dans le lit dense du second régénérateur 9. Lorsque le signal envoyé par la sonde atteint une valeur supérieure à une valeur de consigne préalablement choisie en fonction des paramètres de la régénération, qui a été stockée par les moyens d'asservissement, ceux-ci envoient un signal à la vanne 30 qui augmente le débit d'évacuation du catalyseur et de ce fait augmente le débit d'admission du catalyseur dans l'échangeur. Cette augmentation du débit contribue à une diminution de la température de première régénération enregistrée par la sonde de température 8 qui est alors compensée grâce aux moyens 31 par une augmentation de l'alimentation en oxygène ajustée par une vanne 33 sur la ligne 4 alimentant l'organe de fluidisation du premier régénérateur. Une plus grande quantité de coke peut alors y être brûlée.

Par contre, lorsque le signal envoyé par la sonde 32 atteint une valeur inférieure à la valeur de consigne, la vanne 30 est fermée partiellement de façon à diminuer l'échange thermique. Parallèlement, on diminue la consommation d'oxygène dans le premier régénérateur, on y brûle de ce fait moins de coke, ce qui contribue à réhausser la température du catalyseur dans le second régénérateur. De ce fait, la température est maintenue sensiblement constante dans la gamme de valeurs souhaitée.

A titre illustratif, on présente l'exemple suivant :

| | |
|---|---|
| Débit du catalyseur dans l'échangeur | : 5 88 000 kg/h |
| Température du lit dense du second régénérateur | : 720°C |
| Température de sortie de l'échangeur | : 550°C |
| Quantité d'air de fluidisation dans l'échangeur | : 2 200 kg/h |
| Hauteur du faisceau d'échange (serpentins) | : 5,8 m |
| Hauteur de la zone de désengagement | : 2,5 m |
| Quantité de chaleur échangée | : 125 × 10⁶kJ/h |
| Débit de vapeur générée | : 75 000 kg/h |
| Température de la vapeur | : 258°C |
| Pression de la vapeur | : 4,5 MPa. |

## Revendications

1. Procédé de régénération en lit fluidisé d'un catalyseur contaminé par du coke déposé sur celui-ci, dans lequel on introduit le catalyseur à régénérer, et un gaz contenant de l'oxygène dans une première zone de régénération où il est régénéré au moins en partie dans des conditions appropriées en lit dense, on sépare les effluents gazeux de première régénération que l'on évacue par leurs propres moyens et l'on prélève le catalyseur au moins en partie régénéré de la première zone pour l'envoyer dans la seconde zone de régénération distincte de la première zone de régénération où il est régénéré à une température supérieure à celle de la première zone de régénération, on sépare le catalyseur des fumées de seconde régénération que l'on évacue au moins en partie,
le procédé étant caractérisé par les étapes suivantes :
a) On envoie par une conduite inclinée vers le bas une partie au moins du catalyseur contenu dans la seconde zone de régénération ainsi qu'une partie des fumées dans une zone d'échange thermique externe et de hauteur appropriée, ladite conduite reliant le lit dense de la seconde zone de régénération à la zone d'échange thermique et y débouchant en un point de jonction situé sous le niveau du lit dense de la seconde zone de régénération à une distance de l'extrémité supérieure de la zone d'échange thermique comprise entre le quart et la moitié de la hauteur totale, et de préférence entre le quart et le tiers de la hauteur, et disposé de telle façon que l'on détermine, de l'extrémité inférieure de ladite zone d'échange thermique jusqu'au-dessus dudit point de jonction, une zone en lit dense de catalyseur s'établissant sensiblement jusqu'au niveau de catalyseur dans la seconde zone de régénération et une zone de désengagement ayant un volume approprié au-dessus dudit lit dense jusqu'à l'extrémité supérieure de la zone d'échange thermique, la hauteur de la zone d'échange thermique étant telle que le volume disponible pour le désengagement des gaz correspond à une hauteur de 1 à 5m,
b) on refroidit le catalyseur dans une partie au moins de ladite zone en lit dense dans des conditions d'échange thermique indirect et de fluidisation adéquates, en présence d'un gaz de fluidisation contenant de l'oxygène, le catalyseur circulant vers le bas à contre-courant du sens d'écoulement du gaz de fluidisation,
c) on procède à la séparation du catalyseur et du gaz de fluidisation ainsi que des éventuelles fumées de régénération dans ledit volume de la zone de désengagement.
d) on évacue lesdits gaz et fumées de l'étape c) de la zone de désengagement et on les envoie dans la phase diluée au-dessus du lit dense de la seconde zone de régénération ; et
e) on soutire le catalyseur refroidi de la partie inférieure de la zone d'échange thermique et on le recycle dans la première zone de régénération.

2. Procédé selon la revendication 1 dans lequel on fait déboucher le recyclage du catalyseur refroidi au-dessus du moyen d'injection du gaz de première régénération.

3. Procédé selon l'une des revendications 1 à 2, dans lequel on fait s'écouler le catalyseur refroidi par gravité vers une jonction en Y ou en J en dessous de la première zone de régénération et on le fait remonter, en l'accélérant, jusque dans la première zone de régénération.

4. Procédé selon l'une des revendications 1 à 3 dans lequel la vitesse de fluidisation dans la zone d'échange thermique est de 0,025 m/s à 1 m/s et avantageusement de 0,05 à 0,5 m/s.

5. Procédé selon l'une des revendications 1 à 4 dans lequel la vitesse de fluidisation dans la seconde zone de régénération est de 0,6 à 1,5 m/s et avantageusement de 0,8 à 1,2 m/s.

6. Procédé selon l'une des revendications 1 à 5 dans lequel la hauteur de la zone d'échange thermique est telle que le volume disponible pour le désengagement du gaz de fluidisation et des fumées correspond à une hauteur de 1 à 2,5 m au-dessus du niveau du lit dense dans la seconde zone de régénération.

7. Procédé selon l'une des revendications 1 à 6 dans lequel le gaz est évacué de la zone de désengagement à une vitesse de 2 à 15 m/s et avantageusement de 5 à 8 m/s.

8. Procédé selon l'une des revendications 1 à 7, dans lequel sensiblement tout l'échange thermique indirect est effectué au-dessous du point de jonction.

9. Procédé selon l'une des revendications 1 à 8, dans lequel on contrôle le débit de catalyseur devant être refroidi par au moins une vanne en aval de la zone d'échange thermique, que l'on asservit à une prise de température dans la première ou la deuxième zone de régénération.

10. Dispositif de régénération en lit fluidisé d'un catalyseur contaminé par du coke, comprenant un premier régénérateur (1) qui comporte des moyens d'entrée (2) d'un catalyseur usagé, des moyens de fluidisation (5) et de régénération du catalyseur par un gaz contenant de l'oxygène adaptés à réaliser un lit fluidisé en phase dense (3), des premiers moyens de séparation (6) des fumées de régénération du catalyseur en partie régénéré et des premiers moyens (7) d'évacuation desdites fumées, des moyens de transfert (10) dudit catalyseur du premier régénérateur vers un second régénérateur (9) défini ci-après, le second régénérateur comprenant des moyens de fluidisation et de régénération (12) du catalyseur au moins en partie régénéré par un gaz contenant de l'oxygène adaptés à réaliser un lit fluidisé en phase dense (19) jusqu'à un niveau (19a) approprié, des seconds moyens de séparation (17) des fumées de régénération du catalyseur régénéré et des seconds moyens d'évacuation (18) desdites fumées séparés des premiers moyens d'évacuation, ledit dispositif étant caractérisé en ce qu'il comporte en combinaison :
• un échangeur de chaleur (21) vertical externe de forme allongée, de hauteur appropriée et adapté à recevoir le catalyseur chaud et éventuellement une partie des fumées par une conduite inclinée (20) reliant ledit lit dense du second régénérateur à l'échangeur et à le refroidir alors qu'il circule à travers l'échangeur dans une direction descendante, ledit échangeur comprenant des moyens (24) de fluidisation du catalyseur par un gaz à son extrémité inférieure adaptés à y réaliser un lit dense à un niveau (19b) s'établissant sensiblement jusqu'à celui du lit dense dans la seconde zone de régénération, ladite conduite (20) inclinée débouchant dans l'échangeur (21) en un point de jonction situé sous le niveau (19a) du lit dense du second régénérateur (9) à une distance de l'extrémité supérieure (26) de l'échangeur comprise entre le quart et la moitié de sa hauteur totale, telle qu'elle permet la séparation des éventuelles fumées de régénération et du gaz de fluidisation, du catalyseur dans la partie supérieure (27) de l'échangeur ou zone de désengagement située au-dessus du niveau du lit dense dans l'échangeur, la zone de désengagement ayant une hauteur de 1 à 5 m ;
• des moyens (28) d'évacuation des fumées et du gaz de fluidisation de la zone de désengagement à la partie supérieure de l'échangeur, reliés au second régénérateur (9), en un point au-dessus du niveau (19a) du lit dense du catalyseur, dans ledit régénérateur ; et
• des moyens de soutirage et de recyclage (34, 30) adaptés à une circulation du catalyseur refroidi de l'extrémité inférieure de l'échangeur vers le premier régénérateur.

11. Dispositif selon la revendication 10 dans lequel le point de jonction sur l'échangeur est situé à une distance de l'extrémité supérieure de l'échangeur comprise entre le quart et le tiers de la hauteur.

12. Dispositif selon l'une des revendications 10 à 11 dans lequel l'échangeur (21) comprend un faisceau (22) d'échange thermique avantageusement situé dans la partie de l'échangeur située en dessous du point de jonction.

13. Dispositif selon l'une des revendications 10 à 12 dans lequel les moyens de soutirage et de recyclage comprennent une vanne de régulation (30) du débit de catalyseur située au-dessous de l'extrémité inférieure de l'échangeur.

14. Dispositif selon l'une des revendications 10 à 13 dans lequel les moyens de fluidisation et de régénération du premier régénérateur comprennent un organe de fluidisation tel qu'une grille, un anneau ou une tuyauterie de distribution (5) et dans lequel les moyens de soutirage et de recyclage (34) débouchent dans le lit dense (3) du premier régénérateur au-dessus de l'organe de fluidisation.

15. Dispositif selon l'une des revendications 10 à 14 dans lequel les moyens de soutirage et de recyclage comprennent une conduite 34a et la vanne de régulation reliant l'extrêmité inférieure de l'échangeur à une jonction en Y ou en J, située en dessous du niveau du premier régénérateur, ladite jonction comportant des moyens 34c de remontée du catalyseur dans le premier régénérateur.

16. Dispositif selon l'une des revendications 10 à 15 caractérisé en ce qu'il comprend des moyens de contrôle et de régulation de la température comportant un contrôleur (31) relié à une sonde (32) de température dans le second régénérateur (9), qui asservit ladite vanne de régulation (30), ledit contrôleur étant éventuellement connecté à une sonde de température (8) disposée dans le premier régénérateur (1) et asservissant une vanne (33) de régulation de débit dudit gaz de fluidisation dans le premier régénérateur (1).

## Patentansprüche

1. Verfahren zur Regenerierung, im fluidisierten Bett, eines mit durch auf diesem abgeschiedenen Koks verunreinigten Katalysators, bei dem man den zu regenerierenden Katalysator sowie ein sauerstoffenthaltendes Gas in eine erste Regenerierungszone einführt, wo er wenigstens zum Teil unter geeigneten Bedingungen im dichten Bett regeneriert wird, man die gasförmigen Abströme der ersten Regenerierung abtrennt, die man über die dafür vorgesehenen Mittel abzieht und man den wenigstens zum Teil regenerierten Katalysator aus der ersten Zone entnimmt, um ihn in die zweite Regenerierungszone, die sich von der ersten Regenerierungszone unterscheidet, schickt, wo er bei einer Temperatur höher als die der ersten Regenerierungszone regeneriert wird, man den Katalysator von den Rauchgasen der zweiten Regenerierung trennt, die man wenigstens zum Teil abzieht,
wobei das Verfahren sich auszeichnet durch die folgenden Stufen:
a) Man schickt über eine nach unten geneigte Leitung ein wenigstens einen Teil des in der zweiten Regenerierungszone enthaltenden Katalysators sowie einen Teil der Rauchgase in eine thermische äußere Austauscherzone geeigneter Höhe, wobei die Leitung das dichte Bett der zweiten Regenerierungszone mit der thermischen Austauscherzone verbindet und hierin an einem Vereinigungspunkt mündet, der sich unter dem Niveau des dichten Bettes der zweiten Regenerierungszone unter einem Abstand vom oberen Ende der Wärmeaustauscherzone, der zwischen dem Viertel und der Hälfte der Gesamthöhe ausmacht, und bevorzugt zwischen dem Viertel und dem Drittel seiner Höhe befindet, und derart angeordnet ist, daß man vom unteren Ende dieser Wärmeaustauscherzone bis oberhalb dieses Vereinigungspunktes eine Zone im dichten Katalysatorbett bestimmt, die sich im wesentlichen bis auf das Katalysatorniveau in der zweiten Regenerierungszone erstreckt und eine Freigabezone bestimmt, die über ein geeignetes Volumen verfügt, und zwar oberhalb des dichten Bettes bis zum oberen Ende der Wärmeaustauscherzone, wobei die Höhe der Wärmeaustauscherzone derart ist, daß das für die Freigabe der Gase verfügbare Volumen einer Höhe von 1 bis 5 m entspricht,
b) man kühlt den Katalysator in wenigstens einen Teil der Zone im dichten Bett unter adäquaten Bedingungen des indirekten Austausches und Fluidisierung in Anwesenheit eines sauerstoffenthaltenden Fluidisierungsgases bestimmt, wobei der Katalysator nach unten im Gegenstrom zur Strömungsrichtung des Fluidisierungsgases strömt,
c) man nimmt die Trennung des Katalysators und des Fluidisierungsgases sowie der eventuellen Regenerierungsrauchgase in diesem Volumen der Freigabezone vor,
d) man zieht die Gase und die Rauchgase aus der Stufe c) der Freigabezone ab und schickt sie in die verdünnte Zone oberhalb des dichten Bettes der zweiten Regenerierungszone; und
e) man zieht den gekühlten Katalysator aus dem unteren Teil der Wärmeaustauscherzone ab und recycliert ihn in die erste Regenerierungszone.

2. Verfahren nach Anspruch 1, bei dem man die Recyclierung des gekühlten Katalysators oberhalb des Injektionsmittels für das Gas der ersten Regenerierung ausmünden läßt.

3. Verfahren nach einem der Ansprüche 1 bis 2, bei dem man den gekühlten Katalysator unter Schwerkraft gegen eine Y- oder J-Verzweigung unterhalb der ersten Regenerierungszone strömen läßt und man ihn, indem man ihn beschleunigt, bis in die erste Regenerierungszone.

4. Verfahren nach einem der Ansprüche 1 bis 3, bei dem die Fluidisierungsgeschwindigkeit in der Wärmeaustauscherzone bei 0,025 m/s bis 1 m/s und bevorzugt zwischen 0,05 bis 0,5 m/s ist.

5. Verfahren nach einem der Ansprüche 1 bis 4, bei dem die Fluidisierungsgeschwindigkeit in der zweiten Regenerierungszone zwischen 0,6 bis 1,5 m/s und bevorzugt zwischen 0,8 bis 1,2 m/s ist.

6. Verfahren nach einem der Ansprüche 1 bis 5, bei dem die Höhe der Wärmeaustauscherzone derart ist, daß das für die Freigabe des Fluidisierungsgases und der Rauchgase verfügbare Volumen eine Höhe von 1 bis 2,5 m oberhalb des Niveaus des dichten Bettes in der zweiten Regenerierungszone entspricht.

7. Verfahren nach einem der Ansprüche 1 bis 6, bei dem das Gas aus der Freigabezone bei einer Geschwindigkeit von 2 bis 15 m/s und bevorzugt zwischen 5 und 8 m/s abgezogen wird.

8. Verfahren nach einem der Ansprüche 1 bis 7, bei dem im wesentlichen der gesamte indirekte Wärmeaustausch unterhalb des Vereinigungspunktes durchgeführt wird.

9. Verfahren nach einem der Ansprüche 1 bis 8, bei dem man die Menge des zu kühlenden Katalysators über wenigstens ein Ventil hinter der Wärmeaustauscherzone regelt, die man auf eine Temperaturnahme in der ersten oder der zweiten Regenerierungszone (hilfs)steuert.

10. Vorrichtung zur Regenerierung, im fluidisierten Bett, eines durch Koks verunreinigten Katalysators, einen ersten Regenerator (1) umfassend, der aufweist: Mittel (2) zum Eintritt eines verbrauchten Katalysators, Fluidisierungs- und Regenerierungsmittel (5) des Katalysators durch ein sauerstoffenthaltendes Gas, die so ausgelegt sind, daß sie ein fluidisiertes Bett in dichter Phase (3) erzeugen, erste Trennmittel (6) der Regenerierungsrauchgase des zum Teil regenerierten Katalysators und erste Mittel (7) zum Abziehen der Rauchgase, Überführungsmittel (10) dieses Katalysators aus dem ersten Regenerator zu einem zweiten unten definierten Regenerator (9), wobei der zweite Regenerator Fluidisierungs- und Regenerierungsmittel (12) des wenigstens zum Teil durch ein sauerstoffenthaltendes Gas regenerierten Katalysators umfaßt, die so ausgelegt sind, daß sie ein fluidisiertes Bett in dichter Phase (19) bis zu einem geeigneten Niveau (19a) realisieren, zweite Trennmittel (17) der Regenerierungsrauchgase des regenerierten Katalysators und zweite Abzugsmittel (18) für diese Rauchgase, die von den ersten Abzugsmitteln getrennt wurden, wobei die Vorrichtung sich dadurch auszeichnet, daß sie in Kombination umfaßt:
• einen außenvertikalen Wärmeaustauscher (21) länglicher Gestalt, geeigneter Höhe und der so ausgelegt ist, daß er den heißen Katalysator und gegebenenfalls einen Teil der Rauchgase durch eine geneigte Leitung (20) aufnimmt, welche dieses dichte Bett des zweiten Regenerators mit dem Wärmeaustauscher verbindet und so eingerichtet ist, ihn zu kühlen, während er quer durch den Wärmeaustauscher in einer absteigenden Richtung zirkuliert, wobei der Austauscher Fluidisierungsmittel (24) für den Katalysator durch ein Gas an seinem unteren Ende umfaßt, die so ausgelegt sind, daß sie hierin ein dichtes Bett auf einem Niveau (19b) realisieren, das sich im wesentlichen bis zu dem des dichten Bettes in der zweiten Regenerierungszone einstellt, wobei die geneigte Leitung (20) im Wärmeaustauscher (21) an einer Vereinigungsstelle mündet, die unter dem Niveau (19a) des dichten Bettes des zweiten Regenerators (9) unter einem Abstand vom oberen Ende (26) des Wärmeaustauschers angeordnet ist, der zwischen dem Viertel und der Hälfte seiner Gesamthöhe derart ausmacht, daß er die Abtrennung eventueller Regenerierungsrauchgase sowie des Fluidisierungsgases vom Katalysator im oberen Teil (27) des Wärmeaustauschers oder der Freigabezone ermöglicht, die oberhalb des Niveaus des dichten Bettes im Wärmeaustauscher sich befindet, wobei die Freigabezone eine Höhe von 1 bis 5 m hat;
• Mittel (28) zum Evakuieren der Rauchgase und des Fluidisierungsgases aus der Freigabezone im oberen Teil des Wärmeaustauschers, die mit dem zweiten Regenerator (9) verbunden sind, an einer Stelle oberhalb des Niveaus (19a) des dichten Bettes des Katalysators in diesem Regenerator; und
• Mittel zum Abziehen und Recyclieren (34, 30), die für eine Zirkulation des gekühlten Katalysators vom unteren Ende des Wärmeaustauschers zum ersten Regenerator eingerichtet sind.

11. Vorrichtung nach Anspruch 10, bei der der Vereinigungspunkt auf dem Austauscher sich unter einem Abstand vom oberen Ende des Austauschers, der zwischen dem Viertel und dem Drittel seiner Höhe liegt, befindet.

12. Vorrichtung nach einem der Ansprüche 10 bis 11, bei dem der Austauscher (21) ein Wärmeaustauscherbündel (22) umfaßt, das vorzugsweise in dem Teil des Austauschers unterhalb des Vereinigungspunktes angeordnet ist.

13. Vorrichtung nach einem der Ansprüche 10 bis 12, bei der die Abzugs- und Recyclierungsmittel ein Steuerventil (30) für den Durchsatz des Katalysators umfassen, das unterhalb des unteren Endes des Wärmeaustauschers angeordnet ist.

14. Vorrichtung nach einem der Ansprüche 10 bis 13, bei der die Fluidisierungs- und Regenerierungsmittel des ersten Regenerators ein Fluidisierungsorgan wie ein Gitter, einen Ring oder eine Verteilerleitung (5) umfassen und bei der die Abzugs- und Recyclierungsmittel (34) in das dichte Bett (3) des ersten Regenerators oberhalb des Fluidisierungsorgans münden.

15. Vorrichtung nach einem der Ansprüche 10 bis 14, bei dem die Abzugs- und Recyclierungsmittel eine Leitung 34a aufweisen und das Steuerventil das untere Ende des Wärmeaustauschers mit einer Y- oder J-Verzweigung verbinden, die unterhalb des Niveaus des ersten Regenerators angeordnet ist, wobei diese Verzweigung Mittel 34c für das Heben des Katalysators in den ersten Regenerator umfassen.

16. Vorrichtung nach einem der Ansprüche 10 bis 15, dadurch gekennzeichnet, daß sie Regel- und Steuermittel für die Temperatur umfaßt, einen Regler (31) aufweisend, der mit einer Temperatursonde (32) im zweiten Regenerator (9) verbunden ist, der dieses Steuerventil (30) (hilfs)steuert, wobei der Regler gegebenenfalls mit einer Temperatursonde (8) verbunden ist, die im ersten Regenerator (1) angeordnet ist und ein Steuerventil (33) für den Durchsatz dieses Fluidisierungsgases im ersten Regenerator (1) (hilfs)steuert.

## Claims

1. A process for the regeneration in fluidised bed of a catalyst contaminated with coke deposited thereon, wherein the catalyst to be regenerated and a gas containing oxygen are introduced into a first regeneration zone where it is regenerated, at least in part, under suitable conditions in dense bed, the gaseous effluents from the first regeneration operation are separated and are removed by their own means, and the catalyst is drawn off, at least in part regenerated, from the first zone so as to be conveyed to the second regeneration zone which is separate from the first regeneration zone where it is regenerated at a temperature above that in the first regeneration zone, and the catalyst is separated from the fumes of the second regeneration operation which are removed at least in part,
the process being characterised by the following steps :
a) A part, at least, of the catalyst contained in the second regeneration zone and also a part of the fumes are conveyed downwardly through an inclined conduit into an external heat exchange zone of appropriate height, said conduit connecting the dense bed of the second regeneration zone to the heat exchange zone and opening there at a junction point placed beneath the level of the dense bed of the second regeneration zone at a spacing from the upper end of the heat exchange zone between a quarter and a half of the total height, preferably between a quarter and a third of the height, and disposed in such a way that the lower end of said heat exchange zone up to above said junction point defines a zone of catalyst in dense bed substantially level with the catalyst in the second regeneration zone and a discharge zone of appropriate volume above said dense bed as far as the upper end of the heat exchange zone, the height of heat exchange zone being such that the volume available for the discharge of the gases corresponds to a height of 1 to 5 m,
b) the catalyst is cooled in at least part of said zone in dense bed under suitable indirect heat exchange and fluidisation conditions, in the presence of a fluidisation gas containing oxygen, the catalyst circulating towards the bottom at counter-current to the direction of flow of the fluidisation gas,
c) the catalyst and fluidisation gas and also any regeneration fumes in said volume of the discharge zone are separated,
d) said gases and fumes from step c) are removed from the discharge zone, and they are conveyed into the diluted phase above the dense bed of the second regeneration zone; and
e) the cooled catalyst is drawn off from the lower part of the heat exchange bed, and is recycled in the first regeneration zone.

2. A process according to Claim 1, wherein recycling of the cooled catalyst takes place above the gas injection means of the first regeneration operation.

3. A process according to one of Claims 1 to 2, wherein the cooled catalyst is allowed to flow by the force of gravity to a Y-shaped or J-shaped junction below the first regeneration zone, and it is made to rise, at accelerating speed, as far as the first regeneration zone.

4. A process according to one of Claims 1 to 3, wherein the fluidisation speed in the heat exchange zone is between 0.025 m/s and 1 m/s and advantageously between 0.05 and 0.5 m/s.

5. A process according to one of Claims 1 to 4, wherein the fluidisation speed in the second regeneration zone is between 0.6 and 1.5 m/s and advantageously between 0.8 and 1.2 m/s.

6. A process according to one of Claims 1 to 5, wherein the height of the heat exchange zone is such that the volume available for discharge of the fluidisation gas and fumes is equal to a height of 1 to 2.5 m above the level of the dense bed in the second regeneration zone.

7. A process according to one of Claims 1 to 6, wherein the gas is removed from the discharge zone at a speed of between 2 and 15 m/s and advantageously between 5 and 8 m/s.

8. A process according to one of Claims 1 to 7, wherein substantially all the indirect heat exchange takes place below the junction point.

9. A process according to one of Claims 1 to 8, wherein flow of the catalyst which has to be cooled is controlled by at least one valve downstream of the heat exchange zone, the valve being under the control of a temperature setting in the first or second regeneration zones.

10. An apparatus for regeneration in fluidised bed of a catalyst contaminated with coke, comprising a first regenerator (1) which comprises intake means (2) for a used up catalyst, fluidisation means (5) and regeneration means for the catalyst using a gas containing oxygen, said means operating in fluidised bed in dense phase (3), first separation means (6) for the regeneration fumes of the catalyst which has been partly regenerated and first removal means (7) for said fumes, transfer means (10) for said catalyst from the first regenerator to a second regenerator (9) defined hereinafter, the second regenerator comprising means for fluidisation and for regeneration (12) of the catalyst which has been regenerated at least in part by a gas containing oxygen, said means operating in fluidised bed in dense phase (19) as far as an appropriate level (19a), second separation means (17) for the regeneration fumes from the regenerated catalyst and second means for removal (18) of said fumes separated from the first removal means, said apparatus being characterised in that it comprises, in combination :
• an external, vertical, elongate heat exchanger (21) of suitable height which receives the hot catalyst and possibly a part of the fumes through an inclined conduit (20) connecting said dense bed of the second regenerator to the exchanger, and which cools it as it circulates through the exchanger in a downward direction, said exchanger comprising means (24) for fluidisation of the catalyst using a gas at the lower end, the means forming a dense bed substantially level (19b) with the dense bed in the second regeneration zone, said inclined conduct (20) opening in the heat exchanger (21) at a junction point placed beneath the level (19a) of the dense bed of the second regenerator (9) at a spacing from the upper end (26) of the exchanger between a quarter and a half of the total height thereof in such a way that the separation of possibly the regeneration fumes and of the fluidisation gas, from de catalyst is carried out in the upper end (27) of the heat exchanger or discharge zone located above the level of the dense bed in the heat exchanger, the height of the discharge zone being equal to 1 to 5 m;
• means (28) for removal of the fumes and fluidisation gas from the discharge zone at the upper part of the exchanger, the means being connected to the second regenerator (9) at a point above the level (19a) of the dense bed of the catalyst, in said regenerator; and
• withdrawal and recycling means (34, 30) for circulating the cooled catalyst from the lower end of the exchanger to the first regenerator.

11. An apparatus according to Claim 10 wherein the junction point on the exchanger is disposed at a spacing from the upper end of the exchanger between a quarter and a third of the height.

12. An apparatus according to one of Claims 10 to 11, wherein the exchanger (21) comprises a heat exchange bundle (22) advantageously disposed in the part of the exchanger disposed beneath the junction point.

13. An apparatus according to one of Claims 10 to 12, wherein the withdrawal and recycling means comprise a control valve (30) for flow of the catalyst, the valve being disposed beneath the lower end of the exchanger.

14. An apparatus according to one of Claims 10 to 13, wherein the means for fluidisation and regeneration of the first regenerator comprise a fluidisation member such as a grating, a ring or a distribution pipe (5), and wherein the withdrawal and recycling means (34) open into the dense bed (3) of the first regenerator above the fluidisation member.

15. An apparatus according to one of Claims 10 to 14, wherein the withdrawal and recycling means comprise a conduit 34a and the control valve connecting the bottom end of the exchanger to a Y-shaped or shaped junction disposed beneath the level of the first regenerator, said junction comprising means 34c for rising the catalyst in the first regenerator.

16. An apparatus according to one of Claims 10 to 15, characterised in that it comprises means for controlling and regulating the temperature, the means comprising a control device (31) connected to a temperature probe (32) in the second regenerator, said control valve (30) being under the control of the control device, said control device possibly being connected to a temperature probe (8) disposed in the first regenerator (1), and a valve (33) for controlling the flow of said fluidisation gas in the first regenerator (1) being under the control of said control device.
